# EUROPÄISCHE PATENTANMELDUNG

(11) **EP 4 279 327 A1**
(43) Veröffentlichungstag der Anmeldung: **22.11.2023**
(21) Anmeldenummer: 23172935.1
(22) Anmeldetag: 11.05.2023
(51) Int. Cl.: B60L 53/60, B60L 53/62, B60L 53/65, B60L 53/66, B60L 53/30, B60L 53/64, G06Q 50/06

(54) **LADESYSTEM ZUM LADEN EINES ELEKTROFAHRZEUGS**

(30) Priorität: 17.05.2022 DE 102022204909; 05.08.2022 DE 102022208200
(71) Anmelder: Libreo GmbH, 97318 Kitzingen (DE)
(72) Erfinder: BECK, Bernhard, 97332 Volkach (DE)
(74) Vertreter: FDST Patentanwälte

(57) **Zusammenfassung**

Es wird ein Ladesystem (2) zum Laden eines Elektrofahrzeugs (24) angegeben. Das Ladesystem (2) umfasst mindestens eine Ladestation (4), die dazu eingerichtet ist, in einem Ladevorgang einen Ladestrom für das Elektrofahrzeug (24) zur Verfügung zu stellen. Das Ladesystem (2) umfasst weiterhin einen ersten geeichten Stromzähler (38), der ein fortlaufendes Zählwerk aufweist, sowie einen zweiten geeichten Stromzähler (40), der ein rücksetzbares Zählwerk aufweist. Das Ladesystem (2) umfasst außerdem eine Steuerelektronik (32), die dazu eingerichtet ist, vor dem Beginn eines jeden Ladevorgangs das Zählwerk des zweiten Stromzählers (40) auf einen Ausgangswert zurückzusetzen, und im Zuge eines jeden Ladevorgangs eine Abrechnungsinformation auszugeben, die für den jeweiligen Ladevorgang einen Endzählwert des zweiten Stromzählers (40) sowie einen Anfangszählwert und einen Endzählwert des ersten Stromzählers (38) enthält.

## Beschreibung

Die Erfindung bezieht sich auf ein Ladesystem zum Laden eines Elektrofahrzeugs (E-Fahrzeug), wobei dieses Ladesystem mindestens eine Ladestation aufweist, die dazu ausgebildet ist, in einem Ladevorgang einen Ladestrom für das Elektrofahrzeug zur Verfügung zu stellen.

Die Erfindung bezieht sich dabei vorrangig auf Ladesysteme mit mindestens einer Ladestation, die den Ladestrom als ein- bis dreiphasigen Wechselstrom ausgibt. Solche Ladestationen werden überwiegend im privaten Bereich oder auf Parkplätzen oder Parkhäusern von Gewerbebetrieben oder sonstigen Unternehmen eingesetzt und sind beispielsweise als wandmontierte "Wallbox" oder als auf dem Boden stehende Ladesäule ausgebildet. Ferner umfasst diese Anmeldung aber auch Gleichstrom-Ladestationen, welche dem Fahrzeug den Ladestrom in Form eines Gleichstroms bereitstellen. Unter den Begriff Ladestation fallen ferner auch einfache Netzzugangspunkte, die zum Laden eines E-Fahrzeugs verwendbar sind, aber keine Kommunikation mit der Ladesteuerung des E-Fahrzeugs, keine Strom- bzw. Leistungsüberwachung und/oder keine Fehlerüberwachung bereitstellen.

Ladestationen der oben genannten Art sind in der Regel nicht unmittelbar an das öffentliche Stromnetz angeschlossen, sondern an eine "lokale Stromverteilung". Hierunter wird eine durch einen Netzverknüpfungspunkt von dem öffentlichen Stromversorgungsnetz abgegrenzte elektrische Installation, z.B. eines Hauses (Hausstrominstallation) oder Unternehmens, bezeichnet. Die lokale Stromverteilung umfasst also diejenigen elektrischen Leitungen und Verbraucher sowie gegebenenfalls vorhandene Speicher und/der Stromerzeugungseinheiten, die sich aus Sicht der Ladestation diesseits des Netzverknüpfungspunktes befinden und somit nicht zu dem öffentlichen Stromversorgungsnetz gehören. Grundsätzlich kann eine lokale Stromverteilung ferner auch im "Inselbetrieb" (also ohne Anschluss an das öffentliche Stromnetz) betrieben werden, wenn die lokale Stromverteilung in ausreichendem Maß durch eine oder mehrere lokale Stromerzeugungseinheiten, z.B. eine PV-Anlage, eine Windkraftanlage oder ein Blockheizkraftwerk, gespeist wird.

Ein im Zuge der zunehmenden E-Mobilität verstärkt auftretendes Problem ist die Abrechnung der Energiekosten (Ladestromkosten) eines E-Fahrzeugs, das beruflich (insbesondere von Arbeitnehmern) genutzt wird; insbesondere dann, wenn das E-Fahrzeug an unterschiedlichen Quellen geladen wird. So ist es bei einem beruflich genutzten E-Fahrzeug häufig sinnvoll oder sogar notwendig, das Fahrzeug einerseits im Unternehmen (z.B. auf einem Unternehmensparkplatz) und andererseits an der privaten Ladestation des Fahrzeugnutzers zu laden, wobei die anfallenden Stromkosten aber in der Regel nur dann durch das Unternehmen (insbesondere als Arbeitgeber des Fahrzeugnutzers) getragen werden können, wenn der Ladevorgang hinreichend dokumentiert ist. Problematisch ist zudem häufig die Abrechnung von Ladevorgängen an Ladestationen, die sowohl zum Laden von Unternehmensfahrzeugen als auch zum Laden von Privatfahrzeugen genutzt werden.

Der Erfindung liegt die Aufgabe zugrunde, ein Ladesystem anzugeben, das eine einfache Abrechnung des bei einem Ladevorgang übertragenen Ladestroms ermöglicht.

Diese Aufgabe wird erfindungsgemäß gelöst durch die Merkmale des Anspruchs 1. Das erfindungsgemäße Ladesystem umfasst mindestens eine Ladestation, die dazu eingerichtet ist, in einem Ladevorgang einen (elektrischen) Ladestrom für ein Elektrofahrzeug (E-Fahrzeug) zur Verfügung zu stellen. Das Ladesystem umfasst ersten geeichten Stromzähler, der ein fortlaufendes (d.h. aufsummierendes und nicht-rücksetzbares) Zählwerk aufweist. Zusätzlich zu diesem ersten Stromzähler weist das Ladesystem einen zweiten geeichten Stromzähler auf, der ein rücksetzbares Zählwerk aufweist. Das Ladesystem umfasst weiterhin eine der Ladestation zugeordnete Steuerelektronik, die dazu eingerichtet ist, unmittelbar oder mittelbar vor dem Beginn eines jeden Ladevorgangs das Zählwerk des zweiten Stromzählers auf einen Ausgangswert (insbesondere "null") zurückzusetzen, und im Zuge eines jeden Ladevorgangs eine Abrechnungsinformation auszugeben, die für den jeweiligen Ladevorgang einen Endzählwert des zweiten Stromzählers sowie einen Anfangszählwert und einen Endzählwert des ersten Stromzählers enthält. Die in der Abrechnungsinformation enthaltenen Angaben werden vorzugsweise in einem gemeinsamen Datensatz, und in diesem Fall unmittelbar oder mittelbar nach der Beendigung des Ladevorgangs ausgegeben. Grundsätzlich ist im Rahmen der Erfindung aber auch eine getrennte und unabhängige Ausgabe dieser Angaben möglich. In diesem Fall können Daten der Abrechnungsinformation auch schon vor Beginn oder während des Ladevorgangs, insbesondere jeweils zum Erzeugungszeitpunkt dieser Daten, ausgegeben werden. Beispielsweise kann der Anfangszählwert des zweiten Stromzählers schon zu Beginn oder während des Ladevorgangs ausgegeben werden.

Ein Vorteil des erfindungsgemäßen Ladesystems besteht darin, dass die während des Ladevorgangs übertragene Energiemenge unmittelbar von dem geeichten zweiten Stromzähler angegeben wird. Diese Energiemenge wird dabei ohne weitere Berechnung von der Steuerelektronik in die Abrechnungsinformation übernommen, so dass eine in hohem Maße fehler- und manipulationssichere Abrechnung ermöglicht wird.

Vorzugsweise sind die Steuerelektronik, der erste Stromzähler und der zweite Stromzähler in der Ladestation, und somit insbesondere in einem gemeinsamen Gehäuse der Ladestation, installiert. In diesem Fall kann das Ladesystem im Rahmen der Erfindung grundsätzlich ausschließlich aus der Ladestation mit den darin angeordneten Komponenten bestehen. Alternativ umfasst das Ladesystem mehrere räumlich voneinander getrennte Geräte. Beispielsweise können die Steuerelektronik und/oder die Stromzähler im Rahmen der Erfindung auch als von der Ladestation (also der den Ladestrom zur Verfügung stellenden Baueinheit) räumlich getrennte Geräte ausgebildet sein.

In einer zweckmäßigen Ausführung der Erfindung umfasst das Ladesystem mehrere Ladestationen. In diesem Fall sind vorzugsweise jeder einzelnen Ladestation die zwei vorgenannten geeichten Stromzähler zugeordnet. Das Ladesystem umfasst hier also für jede Ladestation jeweils einen (nicht rücksetzbaren) ersten Stromzähler und einen (rücksetzbaren) zweiten Stromzähler.

Zusätzlich oder alternativ zu einer Mehrzahl von Ladestationen umfasst das Ladesystem bevorzugt eine (insbesondere von der oder jeder Ladestation räumlich getrennte) Abrechnungszentrale. Die Abrechnungszentrale ist beispielsweise durch einen Server mit einer darauf installierten Abrechnungs-Software, insbesondere einen über das Internet zugänglichen Cloud-Server, gebildet.

Weiterhin umfasst das Ladesystem vorzugsweise eine auf einem Mobilgerät, z.B. einem Smartphone oder Tablet-Computer, installierbare Software-Applikation. Diese Software-Applikation ist dabei insbesondere zur (Fern-)Bedienung der oder jeder Ladestation eingerichtet und ist daher nachfolgend als "Bedien-App" bezeichnet. Die Bedien-App weist hierzu vorzugsweise eine Nutzerschnittstelle auf, über die der Nutzer die oder jede Ladestation ansteuern kann. In einer Ausführung, die auf die Abrechnung von Ladevorgängen mehrerer Nutzer ausgelegt ist, umfasst das Ladesystem mehrere Instanzen (d.h. unabhängig voneinander ablaufende Kopien) der Bedien-App. Beispielsweise handelt es sich bei den mehreren Nutzern um die Mitarbeiter eines das Ladesystem benutzenden Gewerbebetriebs oder sonstigen Unternehmens, wobei auf den Smartphones der Mitarbeiter jeweils eine Instanz der Bedien-App lauffähig installiert ist. Anders als die Bedien-App oder die mehrfachen Instanzen der Bedien-App ist das oder jedes Mobilgerät, auf dem die Bedien-App installiert ist, kein Bestandteil des Ladesystems, sondern wird von diesem nur als externe Ressource für Rechenleistung, Speicherplatz und Kommunikationsdienste genutzt. Die Bedien-App kann dabei mit der Steuerelektronik über eine insbesondere drahtlose Datenübertragungsstrecke (vorzugsweise mittels Bluetooth oder WLAN) Daten austauschen. Die Bedien-App greift hierbei auf eine entsprechende Sende- und Empfangseinheit des Mobilgeräts zu, die eine (insbesondere drahtlose) datenübertragungstechnische Verbindung zu dem Transceiver der Steuerelektronik herstellt.

Die Ladestation ist vorzugsweise an eine lokale Stromverteilung, insbesondere eine Haustrominstallation, anschließbar und über diese lokale Stromverteilung an ein öffentliches Stromnetz angeschlossen. Grundsätzlich kann die Ladestation im Rahmen der Erfindung aber auch direkt an das öffentliche Stromnetz oder an eine im Inselbetrieb betriebene lokale Stromverteilung angeschlossen sein. Die Ladestation wird insbesondere in einem Gewerbebetrieb / Unternehmen oder in einem privaten Haushalt zum Laden von beruflich genutzten und ggf. privat genutzten E-Fahrzeugen verwendet.

Die Steuerelektronik umfasst vorzugsweise ein programmierbares Bauteil, z.B. einen Mikroprozessor oder Ein-Platinen-Computer, in dem eine die Funktionen der Steuerelektronik implementierende Software (Firmware) lauffähig installiert ist. Alternativ hierzu ist die Steuerelektronik auch durch einen nicht-programmierbaren Hardwareschaltkreis (z.B. in Form eines ASIC) gebildet. Wiederum alternativ ist die Steuerelektronik durch eine Kombination aus programmierbaren und/oder nicht-programmierbaren Komponenten gebildet.

Der erste und der zweite Stromzähler sind entweder durch unabhängige (insbesondere unabhängig eingehauste) Geräte gebildet oder in einem gemeinsamen Gerät integriert. In dem letzteren Fall können sich die beiden Stromzähler eine gemeinsame Messelektrik bzw. Messelektronik teilen, weisen aber in jedem Fall unabhängige Zählwerke (nämlich ein nicht-rückstellbares Zählwerk und ein rückstellbares Zählwerk auf). Die Steuerelektronik kann grundsätzlich im Rahmen der Erfindung mit den beiden Zählern zu einer monolithischen Baueinheit integriert sein. Vorzugsweise ist das die beiden Stromzähler beinhaltende Gerät aber von der Steuerelektronik getrennt. Des Weiteren sind die Stromzähler vorzugweise auch unabhängig von anderen Komponenten des Ladesystems (und insbesondere der Ladestation) aufgebaut, insbesondere in einem separaten Gehäuse aufgenommen, so dass die Gültigkeit der Eichung der Stromzähler durch Modifikationen von übrigen Komponenten des Ladesystems (z.B. Firmware-Updates der Steuerelektronik oder eine wartungsbedingte Öffnung der Ladestation) nicht beeinträchtigt wird.

Die Rücksetzung des zweiten Stromzählers erfolgt vorzugsweise unmittelbar vor dem Start des jeweiligen Ladevorgangs. Abweichend hiervon kann der zweite Stromzähler im Rahmen der Erfindung aber auch unmittelbar nach dem Ende des vorausgegangenen Ladevorgangs oder zu einem beliebigen Zeitpunkt zwischen dem Beginn eines aktuellen Ladevorgangs und dem Ende des vorausgegangenen Ladevorgangs zurückgesetzt werden.

Die beiden Stromzähler sind insbesondere gemäß der Richtlinie 2004/22/EG für Messgeräte (MID) geeicht.

Vorzugsweise umfasst die von der Steuerelektronik ausgegebene Abrechnungsinformation zusätzlich zu den vorstehend genannten Daten mindestens eine der folgenden Angaben:
- mindestens eine (nachfolgend als "Nutzer-ID" bezeichnete) Angabe, die einen den Ladevorgang startenden Nutzer eindeutig identifiziert, z.B. den Namen, eine Unternehmensnummer oder ein sonstiges Nutzer-Identifikations-Zeichnen
- mindestens eine (nachfolgend als "Fahrzeug-ID" bezeichnete) Angabe, die ein in dem Ladevorgang geladenes Fahrzeug eindeutig identifiziert, z.B. ein Fahrzeug-Kennzeichen oder eine Fahrgestellnummer; ferner enthält die Abrechnungsinformation optional Informationen zum Fahrzeugtyp des geladenen E-Fahrzeugs
- eine den Ladevorgang eindeutig identifizierende Angabe ("Vorgangs-ID")
- eine (nachfolgend als "Tarifangabe" bezeichnete) Angabe, die einen dem Ladevorgang zugeordneten Stromtarif eindeutig identifiziert
- mindestens eine den Ladevorgang charakterisierende Zeitangabe, z.B. ein Anfangszeitpunkt und/oder ein Endzeitpunkt des Ladevorgangs
- eine (nachfolgend als "Stations-ID" bezeichnete) Angabe, die die den Ladevorgang durchführende Ladestation eindeutig identifiziert
- Angaben zur eindeutigen Identifikation des ersten und/oder zweiten Stromzählers, deren Zählwerte in der Abrechnungsinformation enthalten sind, z.B. Zählernummern
- ggf. Angaben zur eindeutigen Identifikation derjenigen Instanz der Bedien-App, mittels der der Ladevorgang gestartet und/oder gestoppt wurde oder die an der Übermittlung der Abrechnungsinformation beteiligt war, und/oder Angaben zur eindeutigen Identifikation des Mobilgeräts, auf dem diese Instanz der Bedien-App installiert war

In einer aus Gründen der Datensicherheit besonders vorteilhaften Variante der Erfindung wird die eindeutige Vorgangs-ID vor Beginn eines Ladevorgangs der Ladestation zugeführt, z.B. durch Übertragung von der Bedien-App des Nutzers auf die Ladestation, durch manuelle Eingabe durch den Benutzer an der Ladestation, Einlesen eines visuell erfassbaren oder elektromagnetischen Codes (z.B. eines QR-Codes, Strichcodes oder RFID-Codes) oder in der Ladestation erzeugt. Diese Vorgangs-ID wird dann vorzugsweise von der Ladestation anstelle der Nutzer-ID oder anderer Angaben, anhand derer der Nutzer eindeutig identifizierbar wäre, als Teil der Abrechnungsinformation ausgegeben. Die Zuordnung eines Ladevorgangs zu einem bestimmten Nutzer erfolgt dabei erst zum Zeitpunkt der Abrechnung.

Eine Nutzer-ID oder andere Angaben, anhand derer der Nutzer eindeutig identifizierbar wäre, sind dabei insbesondere zu keinem Zeitpunkt in der Ladestation hinterlegt, so dass solche personenbezogenen Daten auch nicht durch missbräuchliche Auslesung aus der Ladestation in unberechtigte Hände gelangen können. Entsprechend müssen bei dieser Variante hinsichtlich der Datenspeicherung in der Ladestation keine gesteigerten Sicherheitsanforderungen gestellt werden, um die Sicherheit schutzwürdiger Daten in der Ladestation zu gewährleisten. Maßnahmen zum Schutz der in der Ladestation oder in deren Umgebung gespeicherten Daten können mit anderen Worten entfallen oder vergleichsweise einfach gehalten werden, wodurch eine unaufwändige Gestaltung des Ladesystems ohne negative Auswirkungen auf die Datensicherheit ermöglicht wird.

Die Auslösung eines Ladevorgang und die Bereitstellung der Abrechnungsinformation anhand einer eindeutigen Vorgangs-ID, wobei weder die Vorgangs-ID noch die Abrechnungsinformation Daten enthalten, anhand derer ein Nutzer eindeutig identifizierbar wäre, wird als eigenständige Erfindung angesehen, die auch ohne weitere Merkmale der vorstehend beschriebenen Erfindung vorteilhaft einsetzbar ist.

In einer zweckmäßigen Ausführung der Erfindung wird im Rahmen der Abrechnungsinformation für jeden Ladevorgang ausschließlich ein einziger Endzählwert des zweiten Stromzählers erfasst, der somit die während des Ladevorgangs geladene Gesamtenergiemenge angibt. In einer verfeinerten Ausführung der Erfindung, die die Abrechnung der Ladestromkosten bei zeitlich schwankenden Stromtarifen ermöglicht, ist die Steuerelektronik abweichend dazu eingerichtet, während eines jeden Ladevorgangs das Zählwerk des zweiten Stromzählers zu festgelegten Zeitpunkten, insbesondere zu jeder Viertelstunde, zurückzusetzen. Die Steuerelektronik liest in diesem Fall jeweils vor dem Zurücksetzen den jeweiligen Endzählstand des zweiten Stromzählers aus. Die von der Steuerelektronik ausgegebene Abrechnungsinformation enthält entsprechend für jeden der festgelegten Zeitpunkte einen Endzählwert des zweiten Stromzählers. Optional enthält die Abrechnungsinformation des Weiteren für jeden Endzählwert eine zugeordnete Tarifangabe. Zusätzlich oder alternativ zu der Tarifinformation enthält die Abrechnungsinformation optional für jeden Endzählwert eine zugeordnete Zeitangabe. Jeder Endzählwert des zweiten Stromzählers einschließlich des am Ende des Ladevorgangs erfassten letzten Endzählwerts des zweiten Stromzählers gibt hierbei jeweils diejenige Energiemenge an, die im Zeitraum ab der unmittelbar zuvor erfolgten Rücksetzung des zweiten Stromzählers an das E-Fahrzeug übertragen wurde.

Grundsätzlich kann im Rahmen der Erfindung eine lediglich lokale Ausgabe der Abrechnungsinformation am Ort der Steuerelektronik oder der Ladestation vorgesehen sein, z.B. indem die Steuerelektronik die Abrechnungsinformation über einen angeschlossenen Drucker auf Papier ausdruckt.

Vorzugsweise gibt die Steuerelektronik die Abrechnungsinformation aber auf elektronischem Wege aus, z.B. an die gegebenenfalls vorhandene Bedien-App eines Nutzers und/oder an die Abrechnungszentrale. In dem ersteren Fall erfolgt die Ausgabe der Abrechnungsinformation vorzugsweise über eine drahtlose Datenübertragungsverbindung zwischen der Steuerelektronik und dem Mobilgerät eines Nutzers, auf dem die Bedien-App installiert ist. Die Nutzerschnittstelle der Bedien-App ist dabei vorzugsweise dazu eingerichtet, dem Nutzer der Bedien-App die Abrechnungsinformation (vorzugsweise allerdings nur zu Ladevorgängen, die von diesem Nutzer gestartet wurden) anzuzeigen.

Im Rahmen der Erfindung kann auch vorgesehen sein, dass die Steuerelektronik die Abrechnungsinformation direkt oder über einen zwischengeschalteten Kommunikationsserver an die Abrechnungszentrale übermittelt, beispielsweise drahtgebunden über eine LAN-Verbindung, einen sonstigen Datenbus, durch ein auf die Stromzuleitung aufmoduliertes Datensignal oder drahtlos über WLAN oder ein Mobilfunknetz. In einer besonders vorteilhaften Variante der Erfindung nutzt das Ladesystem aber die Bedien-App (und das oder jedes Mobilgerät, auf dem die Bedien-App installiert ist) zur Übermittlung der Abrechnungsinformation zwischen der Steuerelektronik und der Abrechnungszentrale. In diesem Fall wird die Abrechnungsinformation zunächst (z.B. mittels Bluetooth oder WLAN) von der Steuerelektronik an die auf dem Mobilgerät des Nutzers installierte Bedien-App übertragen, wenn sich der Nutzer (z.B. nach der Beendung des Ladevorgangs) in der Nähe der Steuerelektronik befindet. Bevorzugt wird die Abrechnungsinformation dabei gezielt und ausschließlich auf das Mobilgerät desjenigen Nutzers übertragen, der den Ladevorgangs veranlasst hat. Grundsätzlich kann die Abrechnungsinformation aber im Rahmen der Erfindung zusätzlich oder alternativ auch auf das Mobilgerät eines anderen Nutzers übertragen werden, wenn sich die auf diesem Mobilgerät installierte Bedien-App mit der Ladestation verbindet. Die auf dem Mobilgerät zwischengespeicherte Abrechnungsinformation wird dann sofort oder zu einem späteren Zeitpunkt von der Bedien-App an die Abrechnungszentrale übertragen, wenn die Bedien-App, z.B. über ein Mobilfunknetz oder ein WLAN mit dem Internet, und damit mit der Abrechnungszentrale verbunden ist. Die Nutzung der Bedien-App zur Übermittlung der Abrechnungsinformation ermöglicht insbesondere einen einfachen und effektiven Betrieb der zu dem Ladesystem gehörenden Ladestation(en) in Umgebungen wie z.B. Tiefgaragen, in denen eine direkte Anbindung der oder jeder Ladestation an ein drahtloses oder drahtgebundenes Datenübertragungsnetz nur mit unverhältnismäßig großen Aufwand realisierbar wäre.

In einer zweckmäßigen Ausführungsform der Erfindung wird die oder jede Abrechnungsinformation nicht nur an die Bedien-App und/oder die Abrechnungszentrale ausgegeben, sondern auch lokal am Ort der Steuerelektronik oder der Ladestation persistent gespeichert. Dies ermöglicht eine Wiederherstellung oder Kontrolle der Abrechnungsinformation bei Datenverlust bzw. Manipulationsverdacht.

Um bei Ausführungsformen der Erfindung, bei denen die Abrechnungsinformation mittels der Bedien-App und dem zugehörigen Mobilgerät zwischen der Steuerelektronik und der Abrechnungszentrale transportiert wird, das Risiko eines Datenverlusts oder einer Datenmanipulation zu verringern, ist die Steuerelektronik vorzugsweise dazu eingerichtet, die Abrechnungsinformation zu jedem Ladevorgang mehrfach in Form von mehreren Kopien - sowie zweckmäßigerweise auch über mehrere Instanzen der Bedien-App - auszugeben, so dass die Abrechnungsinformation zu jedem Ladevorgang der Abrechnungszentrale mehrfach zugeführt wird. Die Abrechnungszentrale ist dabei dazu eingerichtet, die dem jeweiligen Ladevorgang zugeordnete Abrechnungsinformation durch Vergleich der mehreren Kopien auf Plausibilität zu prüfen. Die Abrechnungszentrale gibt hierbei beispielsweise eine Fehlermeldung aus, wenn zu einem Ladevorgang nicht-übereinstimmende Kopien der Abrechnungsinformation eingehen. Zusätzlich oder alternativ kann die Abrechnungszentrale im Rahmen der Erfindung dazu eingerichtet sein, die einem Ladevorgang zugeordnete Ladeinformation als plausibel zu markieren, wenn zu diesem Ladevorgang mehrere übereinstimmende Kopien der Abrechnungsinformation eingehen. Optional ist die Abrechnungszentrale dazu ausgebildet, mindestens eine Kontrollmaßnahme zu veranlassen, wenn zu einem Ladevorgang nur eine Kopie der Abrechnungsinformation eingeht. Als Kontrollmaßnahme veranlasst die Abrechnungszentrale beispielsweise eine Vor-Ort-Kontrolle der die Abrechnungsinformation ausgebenden Steuerelektronik oder der zugeordneten Ladestation oder eine Aufforderung an den Nutzer zu der gesonderten Bestätigung der Abrechnungsinformation.

Die einem Ladevorgang zugeordnete Fahrzeug-ID wird vorzugsweise von dem den Ladevorgang startenden Nutzer über die Bedien-App spezifiziert, z.B. indem der Nutzer auf der Nutzerschnittstelle das zu ladende Fahrzeug aus einer vordefinierten Liste von Fahrzeugen auswählt. Um hierbei eine irrtümliche oder missbräuchliche Angabe eines falschen Fahrzeugs, z.B. eines beruflich genutzten Fahrzeugs anstelle des tatsächlich geladenen Privatfahrzeugs des Nutzers, zu erkennen, ist die Steuerelektronik in einer zweckmäßigen Ausgestaltung der Erfindung dazu eingerichtet, als Teil der Abrechnungsinformation eine Angabe zu dem zeitlichen Verlauf der Ladestromstärke oder Ladeleistung auszugeben. Diese Maßnahme beruht auf der Erkenntnis, dass die Ladekurve (also der zeitliche Verlauf der Stromstärke oder elektrischen Leistung während eines Ladevorgangs) für verschiedene Fahrzeugtypen, und teilweise auch für individuelle Fahrzeuge verschieden ist. Die Abrechnungszentrale ist dabei dazu eingerichtet, anhand der Angabe zu dem zeitlichen Verlauf der Ladestromstärke oder Ladeleistung das geladene Fahrzeug zu erkennen und/oder eine in der Abrechnungsinformation enthaltene Angabe zu dem geladenen Fahrzeug zu plausibilisieren. Die Abrechnungszentrale ist dabei insbesondere dazu ausgebildet, das für ein bestimmtes Fahrzeug charakteristische Ladeverhalten selbstlernend, insbesondere mittels künstlicher Intelligenz, zu ermitteln und dieses charakteristische Ladeverhalten dann bei der Plausibilisierung eines späteren (demselben E-Fahrzeug zugeordneten) Ladevorgangs mit der in der Abrechnungsinformation enthaltenen Angabe zu dem zeitlichen Verlauf der Ladestromstärke oder Ladeleistung zu vergleichen. In einer einfachen Ausführung der Erfindung wird beispielsweise der aus der Abrechnungsinformation eines aktuellen Ladevorgangs ersichtliche Mindestladestrom des geladenen E-Fahrzeugs mit dem Mindestladestrom verglichen, den dasselbe E-Fahrzeug bei früheren Ladevorgängen gezogen hatte. Anstelle des Mindestladestroms oder zusätzlich zu diesem kann im Rahmen der Erfindung auch der Verlauf der Ladestromstärke oder Ladeleistung beim Erreichen der Maximalladung der Batterie beobachtet und zur Erkennung des geladenen Fahrzeugs herangezogen werden; dies beruht auf der Erfahrung, dass die Art und Weise, wie E-Fahrzeuge die Stromstärke oder Leistung des Ladestroms bei Erreichen der Vollladung reduzieren, bei unterschiedlichen Fahrzeugtypen in hochverschiedener, individueller Weise variiert.

Wiederum zusätzlich oder alternativ können auch die (z.B. von der Bedien-App automatisch erfasste) Position des Nutzers und die (z.B. von dem Fahrzeug automatisch erfasste) Position des Nutzers bzw. des Fahrzeugs für die Erkennung des Nutzers bzw. Fahrzeugs herangezogen werden. Diese Positionsdaten können im Rahmen der Erfindung zusätzlich in der Abrechnungsinformation enthalten sein.

Alternativ kann die Erkennung des geladenen E-Fahrzeugs oder die Plausibilisierung von Angaben zu dem geladenen E-Fahrzeug anhand des zeitlichen Verlaufs der Ladestromstärke oder der Ladeleistung und/oder anhand der Fahrzeugposition im Rahmen der Erfindung grundsätzlich auch in der Steuerelektronik oder der Bedien-App erfolgen. Eine Übermittlung des zeitlichen Verlaufs der Ladestromstärke oder der Ladeleistung bzw. der Fahrzeugposition an die Abrechnungszentrale ist in diesem Fall nicht notwendig und entsprechend vorzugsweise auch nicht vorgesehen.

Im Rahmen der Erfindung kann die Fahrzug-ID alternativ aber auch auf andere Weise ermittelt werden, beispielsweise durch Kommunikation der Steuerelektronik oder Ladestation mit einem am Fahrzeug befestigten oder in dem Fahrzeug abgelegten ID-Tag, durch datenübertragungstechnische Kommunikation zwischen der Ladestation und der Ladesteuerung des Fahrzeugs, durch automatische Kennzeichenerkennung durch die Steuerelektronik oder die Ladestation, etc.

Weiterhin ist die Abrechnungszentrale vorzugsweise dazu eingerichtet, die verschiedenen Ladevorgängen jeweils zugeordneten Abrechnungsinformationen anhand der Anfangs- und Endzählwerte des ersten Stromzählers und/oder anhand der ggf. in den Abrechnungsinformationen enthaltenen Zeitangaben zu plausibilisieren. Beispiels werden verschiedene mittels derselben Ladestation durchgeführte Ladevorgänge als fehlerhaft erkannt, wenn sie hinsichtlich der angegebenen Zählwerte des ersten Stromzählers und/oder der angegebenen Zeiten der Ladevorgänge überlappen. Mögliche Rundungsfehler, etwa in der letzten Stelle des Zählerstandes, werden dabei nicht als Fehler erkannt.

In einer weiteren zweckmäßigen Ausgestaltung der Erfindung umfasst die Abrechnungsinformation eine Angabe zu der Netzspannung während des der Abrechnungsinformation zugeordneten Ladevorgangs. Sofern der zweite Stromzähler auch während des Ladevorgangs zu vordefinierten Zeitpunkten zurückgesetzt wird, wird vorzugsweise zu jedem dieser Zeitpunkte die Netzspannung erfasst und in der Abrechnungsinformation erfasst. Anstelle einer punktuell (d.h. zu einem bestimmten Zeitpunkt) gemessenen Netzspannung sind in der Abrechnungsinformation alternativ Durchschnitts- oder Maximalwerte enthalten, die den Verlauf der Netzspannung in einem bestimmten Zeitraum charakterisieren. Die Abrechnungszentrale nutzt die Information über die Netzspannung insbesondere bei der Bestimmung des abzurechnenden Stromtarifs oder eines sonstigen Erstattungsbetrags. Dem liegt die Erkenntnis zugrunde, dass die Höhe der Netzspannung ein Indiz für die Stromverfügbarkeit darstellt. Insbesondere kann bei entsprechender Konfiguration der lokalen Stromverteilung, an die die oder jede Ladestation angeschlossen ist, aus der Höhe der Netzspannung geschlossen werden, ob ggf. vorhandene lokale Stromerzeuger wie z.B. eine PV-Anlage während des Ladevorgangs einen Stromüberschuss produzieren, oder ob die lokale Stromverteilung Strom aus dem öffentlichen Stromnetz bezieht. Entsprechend setzt die Abrechnungszentrale beispielsweise den für einen Ladevorgang oder einen Zeitraum innerhalb eines Ladevorgangs anzusetzenden Stromtarif bei hohen Werten der übermittelten Netzspannung (und damit hoher Stromverfügbarkeit) geringer an als bei niedrigen Werten der der übermittelten Netzspannung.

In einer weiteren Variante der Erfindung bieten die Bedien-App oder die Ladestation dem Nutzer eine Auswahlmöglichkeit zwischen mindestens zwei verschiedenen Tarifoptionen, die mit einer unterschiedlichen Ladeleistung bzw. Ladestromstärke verknüpft sind. Beispielsweise kann der Nutzer hierbei über die Bedien-App zwischen einem günstigeren, aber leistungsreduzierten "Spartarif" und einem teureren "Schnellladetarif" mit höherer Ladeleistung wählen. Bei dem Spartarif handelt es sich zum Beispiel um einen Tarif, bei dem die maximale Ladeleistung oder Stromstärke in Abhängigkeit von der Netzbelastung und/oder der Verfügbarkeit von regenerativ erzeugtem Strom variiert wird. Eine Information über die von dem Nutzer getroffene Tarifauswahl wird dabei von der Ladestation als Teil der Abrechnungsinformation ausgegeben.

Ein weitere Verkörperung der Erfindung ist ein Verfahren zum Betrieb eines Ladesystems der vorstehend beschrieben Art. Dabei wird vor dem Beginn eines jeden Ladevorgangs das Zählwerk des zweiten Stromzählers, der der den Ladevorgang durchführenden Ladestation zugeordnet ist, auf einen Ausgangswert zurückgesetzt. Im Zuge des jeweiligen Ladevorgangs wird mittels einer Steuerelektronik des Ladesystems jeweils eine Abrechnungsinformation ausgeben, die für den jeweiligen Ladevorgang einen Endzählwert des zweiten Stromzählers sowie einen Anfangszählwert und einen Endzählwert des ersten Stromzählers enthält.

Die vorstehenden Ausführungen zu Varianten und Ausgestaltungsformen des Ladesystems korrespondieren mit entsprechenden Varianten und Ausgestaltungsformen des Verfahrens. Die im Zusammenhang mit Varianten und Ausgestaltungsformen des Ladesystems erläuterten Effekte und Vorteile sind auf die entsprechenden Varianten und Ausgestaltungsformen des Verfahrens übertragbar.

Nachfolgend werden Ausführungsbeispiele der Erfindung anhand einer Zeichnung näher erläutert. Darin zeigen:
- Fig. 1: in schematischer Darstellung ein Ladesystem zum Laden von Elektrofahrzeugen (E-Fahrzeugen), das mehrere Ladestationen, eine auf einem Mobiltelefon eines Nutzers installierte Software-Applikation (Bedien-App) und eine Abrechnungszentrale umfasst, und
- Fig. 2: in schematischer Darstellung eine zum Laden eines E-Fahrzeug eingesetzte Ladestation des Ladesystems in näherem Detail sowie die auf dem Mobiltelefon des Nutzers installierte Bedien-App des Ladesystems.

Einander entsprechende Teile und Strukturen der Erfindung sind in allen Figuren stets mit gleichen Bezugszeichen versehen.

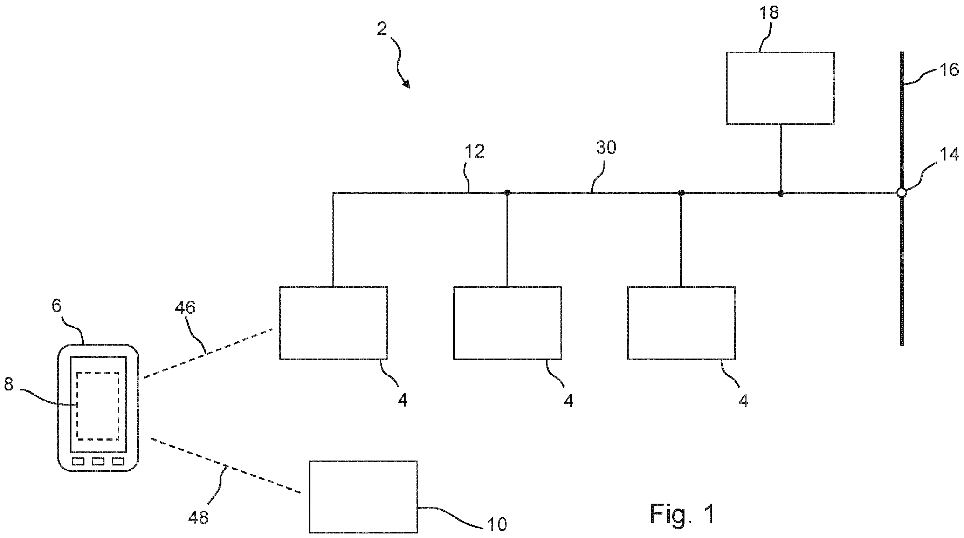

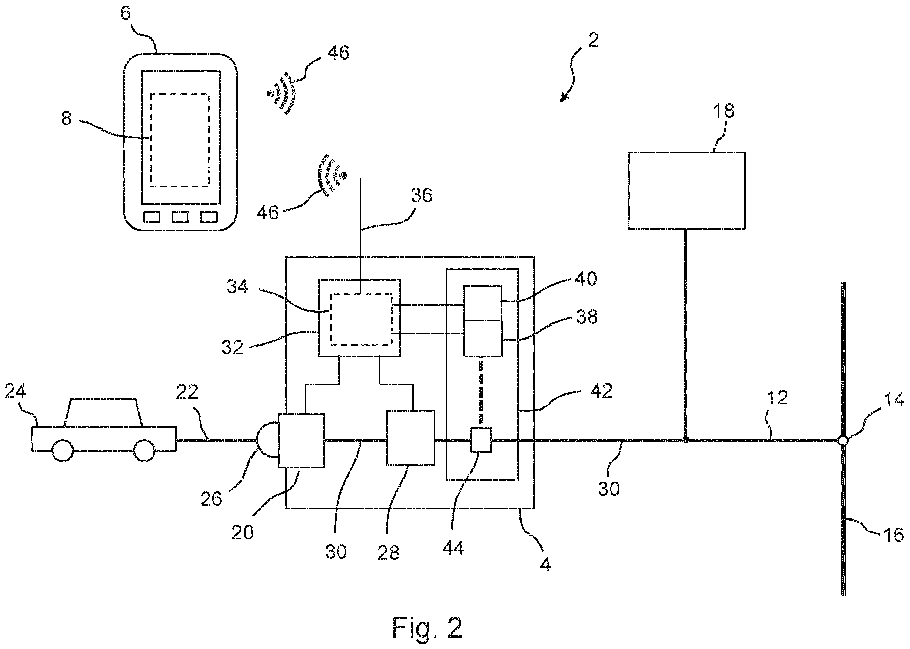

Das in den Fig. 1 und 2 dargestellte Ladesystem 2 umfasst mehrere Ladestationen 4, die zum Beispiel in einer Tiefgarage eines (Gewerbe-)Betriebs oder sonstigen Unternehmens aufgestellt sind, und die von Mitarbeitern des Unternehmens sowohl zum Laden von Unternehmensfahrzeugen (Firmenfahrzeugen) als auch - gegen vollständige oder anteilige Erstattung der Stromkosten durch den Nutzer an das Unternehmen - zum Laden von Privatfahrzeugen genutzt werden können.

Das Ladesystem 2 umfasst weiterhin eine Software-Applikation (Bedien-App 8), von der eine Instanz auf einem Mobiltelefon (Smartphone 6) eines Nutzers (z.B. eines der vorstehend genannten Mitarbeiter) installiert ist, sowie eine Abrechnungszentrale 10.

In dem dargestellten Beispiel sind die Ladestationen 4 in eine (nachfolgend als lokale Stromverteilung 12 bezeichnete) elektrische Strominstallation des Unternehmens eingebunden, die wiederum an einem Netzverknüpfungspunkt 14 an ein öffentliches Stromnetz 16 (nämlich ein dreiphasiges Wechselstrom-Niederspannungsnetz) angeschlossen ist. In die lokale Stromverteilung 12 ist zusätzlich zu den Ladestationen 4 und weiteren (nicht näher dargestellten elektrischen Verbrauchern) optional eine Photovoltaikanlage (PV-Anlage 18) geschaltet.

Jede der Ladestation 4 (von denen eine in Fig. 2 in näherem Detail dargestellt ist) umfasst eine Anschlussdose 20 (d.h. eine Steckdose, insbesondere gemäß IEC 62196 Typ 2), an die ein Ladekabel 22 eines Elektrofahrzeugs (E-Fahrzeugs 24) mit einem entsprechenden Ladestecker 26 anschließbar ist. Alternativ zu der Anschlussdose 20 kann die Ladestation 4 auch mit einem fest angebrachten Ladekabel versehen sein.

Zusätzlich zu der Anschlussdose 20 umfasst die Ladestation 4 einen elektrischen Leistungsschalter 28, der in eine die lokale Stromverteilung 12 mit der Anschlussdose 20 verbindende Hauptstromleitung 30 der Ladestation 4 schaltbar ist, um einen dem E-Fahrzeug 24 zuzuführenden Ladestrom freizugeben oder zu sperren.

Die Ladestation 4 umfasst weiterhin eine Steuerelektronik 32, die beispielsweise durch einen Mikrocontroller oder einen Einplatinen-Computer gebildet ist. Die nachstehend näher beschriebenen Funktionen der Steuerelektronik 32 sind dabei in Form einer Software (Firmware 34) implementiert, die lauffähig in der Steuerelektronik 32 installiert ist. Die Steuerelektronik 32 ist über Steuerleitungen mit der Anschlussdose 20 bzw. dem Leistungsschalter 28 verbunden.

Die Steuerelektronik 32 umfasst weiterhin eine nur angedeutete erste Sende- und Empfangseinheit (Transceiver 36), die eine drahtlose Kommunikation der Steuerelektronik 32 mit weiteren elektronischen Geräten, z.B. mittels Bluetooth oder WLAN, ermöglicht.

In jede der Ladestationen 4 sind außerdem jeweils ein nicht rücksetzbarer erster Stromzähler 38 mit einem ersten Zählwerk sowie ein rücksetzbarer zweiter Stromzähler 40 mit einem zweiten Zählwerk integriert. Die Stromzähler 38, 40 sind mit der Steuerelektronik 32 datenübertragungstechnisch verbunden, so dass Zählerwerte von den Stromzählern 38,40 an die Steuerelektronik 32 übertragen werden können und dass das Zählwerk des zweiten Stromzählers 40 durch die Steuerelektronik 32 zurückgesetzt werden kann. Die beiden Stromzähler 38, 40 sind in einem gemeinsamen Gehäuse 42 integriert und teilen sich eine gemeinsame Zählelektronik 44, die ein der Energiemenge des durch die Hauptstromleitung 30 fließenden Ladestroms entsprechendes Zählsignal (z.B. eine energieproportionale Anzahl von Zählimpulsen) erzeugt. Das aus den beiden Stromzählern 38, 40 bestehende Gerät ist gemäß MID geeicht.

Die auf dem Smartphone 6 installierte Bedien-App 8 dient zur Konfiguration der Ladestation 4, zum Starten und Beenden von Ladevorgängen durch den Nutzer sowie zur Übertragung von Daten zwischen einer der Ladestationen 4 und der Abrechnungszentrale 10. Die Bedien-App 8 kann hierzu mit der Firmware 34 der Steuerelektronik 32 über eine drahtlose Datenübertragungsstrecke 46 (vorzugsweise mittels Bluetooth oder WLAN) verbunden werden oder verbindet sich automatisch mit der Firmware 34, wenn sich das Smartphone 6 in der Nähe der Ladestation 4 befindet. Die Bedien-App 8 greift hierbei auf eine entsprechende Sende- und Empfangseinheit des Smartphones 6 zu, die eine datenübertragungstechnische Verbindung zu dem Transceiver 36 der Ladestation 4 herstellt.

Anders als die Bedien-App 8 ist das Smartphone 6 hierbei kein Bestandteil des Ladesystems 2, sondern wird von diesem nur als externe Ressource für Rechenleistung, Speicherplatz und Kommunikationsdienste genutzt.

Die Abrechnungszentrale 10 ist vorzugsweise durch einen Cloud-Server gebildet. Die Bedien-App 8 ist vorzugsweise dazu ausgebildet, mit der Abrechnungszentrale 10 über eine Internet-Verbindung 48 Daten auszutauschen, wobei sie - je nach den Umgebungsbedingungen des Smartphones 6 - wahlweise unter Nutzung entsprechender Transceiver des Smartphones 6 Mobilfunk, WLAN oder einen drahtgebundenen LAN-Anschluss nutzt.

Zur Durchführung eines Ladevorgangs stellt ein Nutzer, bei dem es sich beispielhaft um einen Mitarbeiter des das Ladesystem 2 benutzenden Unternehmens handelt, das zu ladende E-Fahrzeug 24 in der Tiefgarage des Unternehmens in der Nähe einer der Ladestationen 4 ab und stellt mittels des (an der Ladestation 4 fest montierten oder separaten) Ladekabels 22 eine elektrisch leitende Verbindung zwischen der Ladestation 4 und dem E-Fahrzeug 24 her.

Eine vorzugsweise in der Steuerelektronik 32 integrierte Steuerung der Ladestation 4 stellt über das Ladekabel 22, z.B. über die als "Control Pilot" (CP) bezeichnete Daten- bzw. Kontrollleitung des Ladekabels 22 oder über ein auf den Ladestrom aufmoduliertes Signal (Powerline), eine signalübertragungstechnische Verbindung mit einer (nicht explizit dargestellten) Ladesteuerung des E-Fahrzeugs 24 her und wartet auf die Freigabe des Ladevorgangs durch den Nutzer.

Hierzu öffnet der Nutzer die auf seinem Smartphone 6 installierte Instanz der Bedien-App 8 und wählt - ggf. nach einer Nutzeridentifikation unter Passworteingabe, Fingerabdruckerkennung, Gesichtserkennung, etc. - das zu ladende Fahrzeug 24 aus einer durch die Bedien-App 8 angezeigten Liste aus.

Die Bedien-App 8 verbindet sich über die Datenübertragungsstrecke 46 mit der Steuerelektronik 32 und übermittelt (eine in der Bedien-App 8 hinterlegte) eindeutige Nutzer-ID des Nutzers und eine eindeutige Fahrzeug-ID des ausgewählten E-Fahrzeugs 24 an die Steuerelektronik 32.

Die Steuerelektronik 32 prüft anhand der Nutzer-ID und/oder der Fahrzeug-ID sowie anhand von hinterlegten Daten, ob der Nutzer bzw. das Fahrzeug für einen Ladevorgang autorisiert sind. Ist dies der Fall, so erfasst die Steuerelektronik 32 den aktuellen Zählwert des ersten Stromzählers 38 als Anfangszählwert sowie die zugehörige Uhrzeit als Anfangszeitpunkt des Ladevorgangs. Die Steuerelektronik 32 setzt weiterhin das Zählwerk des zweiten Stromzählers 40 zurück und startet den Ladevorgang, in dem sie durch Aufsteuern (Schließen) des Leistungsschalters 28 die elektrische Verbindung des E-Fahrzeugs 24 mit der lokalen Stromverteilung 12 freischaltet.

Während des Ladevorgangs erfasst die Steuereinheit 32 zeitaufgelöst den Verlauf der Ladestromstärke. Beispielsweise erfasst die Steuerelektronik alle 5 Minuten den Wert der Ladestromstärke sowie - optional - die zugehörige Uhrzeit. Alternativ erfasst die Steuerelektronik 32 bei jeder Änderung der Ladestromstärke den jeweils geänderten Wert der Ladestromstärke sowie die Uhrzeit der Änderung.

Optional setzt die Steuerelektronik 32 zusätzlich während des Ladevorgangs zu festgelegten Zeitpunkten, beispielsweise zu jeder Viertelstunde (also z.B. um 09:15:00, 09:30:00, 09:45:00, etc.) das Zählwerk des zweiten Stromzählers 40 zurück und erfasst jeweils unmittelbar vor dem Zurücksetzen den jeweiligen Endzählwert des zweiten Stromzählers 40 sowie - optional - den aktuellen Zählwert des ersten Stromzählers 38, die zugehörige Uhrzeit und/oder den zugehörigen Wert der Netzspannung.

Zur Beendigung des Ladevorgangs nähert sich der Nutzer wiederum räumlich an die den Ladevorgang durchführende Ladestation 4 an und öffnet auf dem Smartphone 6 die Bedien-App 8, worauf sich die Bedien-App 8 wiederum über die Datenübertragungsstrecke 46 mit der Ladestation 4 verbindet. Der Nutzer beendet den Ladevorgang, in dem er auf der Nutzerschnittstelle der Bedien-App 8 eine entsprechende Schaltfläche betätigt. Sofern ein gewünschter Ladezustand der Batterie erreicht wird, wird der Ladevorgang abweichend selbsttätig durch die Steuerelektronik 32 beendet.

Die Steuerelektronik 32 beendet in beiden Fällen den Ladevorgang, indem sie die elektrische Verbindung des E-Fahrzeugs 24 mit der lokalen Stromverteilung 12 durch Absteuern (Öffnen) des Leistungsschalters 28 sperrt.

Anschließend liest die Steuerelektronik 32 die aktuellen Zählwerte des ersten Stromzählers 38 und des zweiten Stromzählers 40 als Endzählwerte aus und erfasst die zugehörige Uhrzeit als Endzeitpunkt des Ladevorgangs sowie - optional - den zugehörigen Wert der Netzspannung.

Die Steuerelektronik 32 erzeugt hierauf eine dem Ladevorgang zugeordnete Abrechnungsinformation, die insbesondere folgende Angaben enthält:
- die Stations-ID (z.B. in Form einer der Ladestation 4 eindeutig bezeichnenden Nummer)
- die Nutzer-ID
- die Fahrzeug-ID
- die Zählernummer(n) des ersten und zweiten Stromzählers 38, 40
- den Anfangszeitpunkt (Uhrzeit) des Ladevorgangs
- den Anfangszählwert des ersten Stromzählers 38
- optional für jede Viertelstunde während des Ladevorgangs den jeweiligen aktuellen Zählwert des ersten Stromzählers 38 und den Endzählwert des zweiten Stromzählers 40 vor dem Zurücksetzen des letzteren sowie - optional - die zugeordnete Uhrzeit und/oder den zugeordneten Wert der Netzspannung und/oder für jeden Zeitpunkt eine zugeordnete Tarifangabe
- den Endzeitpunkt (Uhrzeit) des Ladevorgangs
- den jeweiligen Endzählwert des ersten Stromzählers 38 und des zweiten Stromzählers 40 sowie - optional - eine zugeordnete Tarifangabe
- optional den Wert der Netzspannung zum Endzeitpunkt des Ladevorgangs
- optional die erfassten Daten zum zeitlichen Verlauf der Ladestromstärke

Die Steuerelektronik 32 übermittelt diese Abrechnungsinformation über die Datenübertragungsstrecke 46 an die Bedien-App 8, die diese Daten auf dem Smartphone 6 zwischenspeichert und auf Anforderung durch den Nutzer auf der Nutzerschnittstelle anzeigt.

Die Bedien-App 8 prüft nun einmalig oder - im Misserfolgsfall - wiederholt, ob sie eine datenübertragungstechnische Verbindung mit der über das Internet zugänglichen Abrechnungszentrale 10 aufbauen kann. Sobald dies gelingt, übermittelt die Bedien-App 8 die Abrechnungsinformation über das Internet - beispielsweise unter Nutzung einer Mobilfunkverbindung oder eines WLAN - an die Abrechnungszentrale 10.

Die Abrechnungszentrale 10 ermittelt aus der erhaltenen Abrechnungsinformation die für den Ladevorgang angefallenen Ladestromkosten. Sie ermittelt weiterhin anhand der Fahrzeug-ID, ob es sich bei dem geladenen E-Fahrzeug um einen Firmenwagen oder ein Privat-Fahrzeug handelt. In Abhängigkeit von dieser Information ermittelt die Abrechnungszentrale 10, ob und ggf. in welcher Höhe die Stromkosten dem Nutzer angerechnet werden.

In einem zweiten Ausführungsbeispiel umfasst das - ansonsten dem Ausführungsbeispiel gemäß Fig. 2 entsprechende - Ladesystem 2 eine auf dem Privatgrund des Nutzers aufgestellte Ladestation 4, die von dem Nutzer wiederum sowohl zum Laden eines Privatfahrzeugs als auch - gegen vollständige oder teilweise Erstattung der Stromkosten durch das Unternehmen an den Nutzer - zum Laden eines Firmenfahrzeugs genutzt werden kann. Optional wird die Ladestation 4 darüber hinaus von weiteren unternehmensfremden Person zum Laden von weiteren Privatfahrzeugen genutzt. Bei der Abrechnungszentrale 10 handelt es sich hierbei vorzugsweise um einen von dem Unternehmen des Nutzers unabhängigen Cloud-Dienst, der sowohl von Unternehmen als auch von Privatleuten (beispielsweise gemeinsamen Inhabern einer privaten Ladestation) zur Abrechnung der Ladestromkosten verwendbar ist.

Der Ladevorgang erfolgt hierbei grundsätzlich in der anhand des ersten Ausführungsbeispiels beschriebenen Weise. Die Abrechnungszentrale 10 prüft hierbei wiederum anhand der Nutzer-ID und der Fahrzeug-ID, ob der Ladevorgang dem Unternehmen zuzuordnen ist oder ein private Nutzung darstellt. In Abhängigkeit von dieser Information berechnet die Abrechnungszentrale 10 eine etwaige vollständige oder teilweise Erstattung der Ladestromkosten von dem Unternehmen an den Nutzer. Zu Ladevorgängen an der privaten Ladestation, die nicht dem Unternehmen zuzuordnen sind, wird keine Information an das Unternehmen weitergeleitet.

In einem dritten Ausführungsbeispiel sind in der Steuerelektronik 32 des - ansonsten dem ersten oder zweiten Ausführungsbeispiel entsprechenden - Ladesystems 2 zu keinem Zeitpunkt Angaben hinterlegt, die den Nutzer und/oder das zu ladende Fahrzeug eindeutig identifizieren könnten, insbesondere also nicht die Nutzer-ID bzw. Fahrzeug-ID.

Vor der Durchführung eines Ladevorgangs wird gemäß der dritten Ausführungsbeispiel ein digitaler (insbesondere kryptographischer) Schlüssel erzeugt, der den Besitzer zur Durchführung eines einzigen Ladevorgangs berechtigt und eine diesen Ladevorgang eindeutig kennzeichnende Vorgangs-ID enthält. Der digitale Schlüssel wird vorzugsweise auf Aufforderung durch den Nutzer mittels der Bedien-App 8 erzeugt, die die Vorgangs-ID zusammen mit der Nutzer-ID und der Fahrzeug-ID an die Abrechnungszentrale 10 sendet. Alternativ kann der digitale Schlüssel auf Aufforderung durch die Bedien-App 8 und Übermittlung der Nutzer-ID und der Fahrzeug-ID (oder anderweitige Autorisierung des Nutzers und ggf. Bestimmung des zu ladenden E-Fahrzeugs) auch vorab in der Abrechnungszentrale 10 erzeugt und an die Bedien-App 8 übermittelt werden.

Zur Auslösung des Ladevorgangs übermittelt die Bedien-App 8 hierbei nur die Vorgangs-ID, nicht aber die Nutzer-ID und die Fahrzeug-ID an die Steuerelektronik 32. Die von der Ladestation 4 nach dem Ladevorgang erzeugte Abrechnungsinformation enthält entsprechend nur die Vorgangs-ID, aber keine Daten, die den Nutzer oder das geladene Fahrzeug eindeutig identifizieren würden, insbesondere weder die Nutzer-ID noch die Fahrzeug-ID. Vielmehr ist die Zuordnung dieser personen- und fahrzeugspezifischen Daten zu der Vorgangs-ID des Ladevorgangs nur der Abrechnungszentrale 10 (oder ggf. der Bedien-App 8) möglich.

Der digitale Schlüssel wird entweder spezifisch für eine bestimmte Ladestation 4 erzeugt, so dass der Nutzer mit diesem Schlüssel nur an dieser Ladestation 4 einen Ladevorgang auslösen kann, oder er wird in einer für mehrere oder alle Ladestationen 4 des Ladesystems 2 gültigen Weise erzeugt. Weiterhin enthält der digitale Schlüssel optional Daten, die einen Maximalwert des Ladestroms oder der Ladeleistung oder die Abhängigkeit dieses Maximalwert von Umgebungsbedingungen (z.B. der Netzlast oder der Verfügbarkeit an regenerativ erzeugtem Strom) charakterisieren.

In den vorstehend beschriebenen Ausführungsbeispielen, die auch in Kombination eingesetzt werden können, berücksichtigt die Abrechnungszentrale 10 optional zusätzlich die übermittelten Werte der Netzspannung bei der Berechnung der zu erstattenden Ladestromkosten, beispielsweise im Rahmen eines betrieblichen Incentive-Programms für umweltfreundliches oder netzschonendes Laden. Beispielsweise werden die von dem Nutzer an das Unternehmen für die Nutzung der beruflichen Ladestation 4 zu erstattenden Ladestromkosten erniedrigt, wenn und insoweit die Netzspannung während des Ladevorgangs einen vorgegebenen Grenzwert dauerhaft oder zumindest für einen bestimmten zeitlichen Anteil überschritt, z.B. weil der Nutzer den Ladevorgang in einem Zeitintervall mit hoher Stromverfügbarkeit durchführt. Andererseits werden beispielsweise die von dem Unternehmen an den Nutzer für die Nutzung der privaten Ladestation 4 zu erstattenden Ladestromkosten erhöht, wenn und insoweit die Netzspannung während des Ladevorgangs einen vorgegebenen Grenzwert überschritt, z.B. weil der Nutzer ganz oder anteilig privat erzeugten Solarstrom zum Laden eines Unternehmensfahrzeugs verwendet hatte. Die Anpassung des Ladestromtarifs (also der in Rechnung gestellten Kosten für den zu einem Zeitpunkt oder innerhalb eines Zeitintervalls gezogenen Ladestrom) in Abhängigkeit von der Höhe der Netzspannung zu diesem Zeitpunkt oder in diesem Zeitintervall wird als eigenständige Erfindung angesehen, die auch unabhängig von anderen Merkmalen der hier beschriebenen Erfindung vorteilhaft einsetzbar ist.

In den vorstehend beschriebenen Ausführungsbeispielen werden im Betrieb des Ladesystems 2 vorzugsweise
- die mehrfache Übermittlung von Kopien der Abrechnungsinformation von der jeweiligen Ladestation 4 an die Abrechnungszentrale 10,
- die Plausibilisierung der Abrechnungsinformationen durch die Abrechnungszentrale 10 anhand der Zählwerte des ersten (nicht rücksetzbaren) Stromzählers 38 der jeweiligen Ladestation 4 und/oder anhand der übermittelten Ladezeitpunkte, und/oder
- die Plausibilisierung der Abrechnungsinformationen durch die Abrechnungszentrale anhand der übermittelten Ladekurven sowie der erlernten Information über das charakteristische Ladeverhalten des jeweils angegebenen E-Fahrzeugs 24

in der jeweils vorstehend beschriebenen Weise eingesetzt.

Die Erfindung wird an den vorstehend beschriebenen Ausführungsbeispielen besonders deutlich, ist auf diese Ausführungsbeispiele aber nicht beschränkt. Vielmehr können weitere Ausführungsformen der Erfindung aus den Ansprüchen und der vorstehenden Beschreibung abgeleitet werden.

### Bezugszeichenliste

- 2: Ladesystem
- 4: Ladestation
- 6: Smartphone
- 8: Bedien-App
- 10: Abrechnungszentrale
- 12: lokale Stromverteilung
- 14: Netzverknüpfungspunkt
- 16: Stromnetz
- 18: PV-Anlage
- 20: Anschlussdose
- 22: Ladekabel
- 24: E-Fahrzeug
- 26: Ladestecker
- 28: Leistungsschalter
- 30: Hauptstromleitung
- 32: Steuerelektronik
- 34: Firmware
- 36: Transceiver
- 38: (erster) Stromzähler
- 40: (zweiter) Stromzähler
- 42: Gehäuse
- 44: Zählelektronik
- 46: Datenübertragungsstrecke
- 48: Internet-Verbindung

## Patentansprüche

1. Ladesystem (2) zum Laden eines Elektrofahrzeugs (24),
- mit mindestens einer Ladestation (4), die dazu eingerichtet ist, in einem Ladevorgang einen Ladestrom für das Elektrofahrzeug (24) zur Verfügung zu stellen,
- mit einem ersten geeichten Stromzähler (38), der ein fortlaufendes Zählwerk aufweist,
- mit einem zweiten geeichten Stromzähler (40), der ein rücksetzbares Zählwerk aufweist, und
- mit einer Steuerelektronik (32), die dazu eingerichtet ist, vor dem Beginn eines jeden Ladevorgangs das Zählwerk des zweiten Stromzählers (40) auf einen Ausgangswert zurückzusetzen, und im Zuge eines jeden Ladevorgangs eine Abrechnungsinformation auszugeben, die für den jeweiligen Ladevorgang einen Endzählwert des zweiten Stromzählers (40) sowie einen Anfangszählwert und einen Endzählwert des ersten Stromzählers (38) enthält.

2. Ladesystem (2) nach Anspruch 1,
wobei die Steuerelektronik (32), der erste Stromzähler (38) und der zweite Stromzähler (40) in der Ladestation (4) installiert sind.

3. Ladesystem (2) nach Anspruch 1 oder 2,
wobei die Abrechnungsinformation zusätzlich eine Angabe enthält, die einen den Ladevorgang startenden Nutzer identifiziert.

4. Ladesystem (2) nach einem der Ansprüche 1 bis 3,
wobei die Abrechnungsinformation zusätzlich eine Angabe enthält, die ein in dem Ladevorgang geladenes Elektrofahrzeug (24) identifiziert.

5. Ladesystem (2) nach einem der Ansprüche 1 bis 4,
wobei die Abrechnungsinformation zusätzlich eine Angabe enthält, die einen bestimmten Ladevorgang identifiziert.

6. Ladesystem (2) nach einem der Ansprüche 1 bis 5,
wobei die Abrechnungsinformation zusätzlich eine Angabe enthält, die einen dem Ladevorgang zugeordneten Stromtarif identifiziert.

7. Ladesystem (2) nach einem der Ansprüche 1 bis 6,
wobei die Steuerelektronik (32) dazu eingerichtet ist, während eines jeden Ladevorgangs das Zählwerk des zweiten Stromzählers (40) zu festgelegten Zeitpunkten, insbesondere zu jeder Viertelstunde, zurückzusetzen, und wobei die Abrechnungsinformation für jeden der festgelegten Zeitpunkte einen Endzählwert des zweiten Stromzählers (40) sowie, optional, eine Angabe, die einen diesem Endzählwert zugeordneten Stromtarif identifiziert, enthält.

8. Ladesystem (2) nach einem der Ansprüche 1 bis 7,
mit einer von der Ladestation (4) räumlich getrennten Abrechnungszentrale (10), wobei die Ladestation (4) dazu eingerichtet ist, die Abrechnungsinformation elektronisch an die Abrechnungszentrale (10) auszugeben.

9. Ladesystem (2) nach einem der Ansprüche 1 bis 8,
mit einer auf einem elektronischen Mobilgerät (6) eines Nutzers installierbaren Software-Applikation (8) zur Bedienung der Ladestation (4), die mit der Steuerelektronik (32) datenübertragungstechnisch verbindbar ist, um einen Ladevorgang zu starten und/oder zu beenden.

10. Ladesystem (2) nach den Ansprüchen 8 und 9,
wobei die Steuerelektronik (32) dazu eingerichtet ist, die Abrechnungsinformation an die Software-Applikation (8) zur Bedienung der Ladestation (4) auszugeben, und wobei diese Software-Applikation (8) dazu eingerichtet ist, die Abrechnungsinformation an die Abrechnungszentrale (10) weiterzuleiten.

11. Ladesystem (2) nach einem der Ansprüche 8 bis 10,
wobei die Steuerelektronik (32) dazu eingerichtet ist, die Abrechnungsinformation zu jedem Ladevorgang mehrfach in Form von mehreren Kopien auszugeben, und wobei die Abrechnungszentrale (10) dazu eingerichtet ist, die dem jeweiligen Ladevorgang zugeordnete Abrechnungsinformation durch Vergleich der mehreren Kopien auf Plausibilität zu prüfen.

12. Ladesystem (2) nach einem der Ansprüche 8 bis 11,
wobei die Steuerelektronik (32) dazu eingerichtet ist, als Teil der Abrechnungsinformation eine Angabe zu dem zeitlichen Verlauf der Ladestromstärke oder Ladeleistung auszugeben, und wobei die Abrechnungszentrale (10) dazu eingerichtet ist, anhand der Angabe zu dem zeitlichen Verlauf der Ladestromstärke oder Ladeleistung das geladene Elektrofahrzeug zu erkennen und/oder eine in der Abrechnungsinformation enthaltene Angabe zu dem geladenen Elektrofahrzeug (24) zu plausibilisieren.

13. Ladesystem (2) nach einem der Ansprüche 1 bis 12,
die Abrechnungsinformation zusätzlich eine Angabe zu der Netzspannung während des der Abrechnungsinformation zugordneten Ladevorgangs aufweist.

14. Ladesystem (2) nach Anspruch 13,
wobei die Steuerelektronik (32) oder die Abrechnungszentrale (10) dazu eingerichtet sind, die in der Abrechnungsinformation enthaltene Angabe zu der Netzspannung bei der Bestimmung eines dem Ladevorgang zugeordneten Stromtarifs zu berücksichtigen.

15. Verfahren zum Betrieb eines Ladesystems (2) nach einem der Ansprüche 1 bis 14,
wobei vor dem Beginn eines jeden Ladevorgangs das Zählwerk des zweiten Stromzählers (40), der der den Ladevorgang durchführenden Ladestation (4) zugeordnet ist, auf einen Ausgangswert zurückgesetzt wird, und wobei im Zuge des Ladevorgangs mittels einer dieser Ladestation (4) zugeordneten Steuerelektronik (32) eine Abrechnungsinformation ausgeben wird, die für den jeweiligen Ladevorgang einen Endzählwert des zweiten Stromzählers sowie einen Anfangszählwert und einen Endzählwert des ersten Stromzählers (38) enthält.
